# EUROPEAN PATENT APPLICATION

(11) **EP 4 470 695 A1**
(43) Date of publication of application: **04.12.2024**
(21) Application number: 23778237.0
(22) Date of filing: 28.03.2023
(51) Int. Cl.: B22F 10/366, B22F 10/28, B33Y 10/00

(54) **LASER SCANNING METHOD AND DEVICE FOR POWDER BED FUSION PROCESS, AND STORAGE MEDIUM**

(30) Priority: 30.03.2022 CN 202210321518; 20.03.2023 CN 202310267615
(71) Applicant: Farsoon Technologies Co. Ltd., Changsha, Hunan 410205 (CN)
(72) Inventor: XU, Feng, Changsha, Hunan 410205 (CN); LIU, Ligeng, Changsha, Hunan 410205 (CN); CHEN, Yuhan, Changsha, Hunan 410205 (CN); TANG, Ping, Changsha, Hunan 410205 (CN); LIU, Liang, Changsha, Hunan 410205 (CN)
(74) Representative: M. Zardi & Co S.A.
(86) International application number: PCT/CN2023/084457
(87) International publication number: WO 2023/185872

(57) **Abstract**

A laser scanning method for a powder bed fusion process, including: slicing a part to be printed to obtain a cross section to be scanned having one or more closed polygons; selecting a portion or all of at least one polygon as an area to be processed, and filling the interior of the area to be processed with fill lines, wherein all fill lines close to or connected to a boundary of a contour of the polygon are parallel to each other; and scanning and sorting the parallel fill lines f(k), so that an end point of an end of a subsequently scanned fill line close to or connected to the contour does not exceed a previously scanned fill line adjacent to the subsequently scanned fill line. Also provided are a laser scanning device for a powder bed fusion process, a powder bed fusion apparatus, and a computer readable storage medium. The method and the device facilitate the gradient control of local temperature of a melt pool, thereby improving the surface quality and compactness of a part.

## Description

### CROSS-REFERENCE TO RELATED APPLICATION

The present application claims priority to Chinese patent application No. 202210321518.X, entitled "Laser Scanning Method and Device for Powder Bed Fusion Process, and Storage Medium", filed with the Chinese Patent Office on March 30, 2022 and Chinese patent application No. 202310267615.X, entitled "Laser Scanning Method and Device for Powder Bed Fusion Process, and Storage Medium", filed in the Chinese Patent Office on March 20, 2023, which are incorporated herein by reference in their entirety.

### TECHNICAL FIELD

The present application relates to the field of additive manufacturing technology and in particular, to a laser scanning method and device for a powder bed fusion process, a computer device and a storage medium.

### BACKGROUND

Selective laser melting technology is rapid manufacturing technology in which three-dimensional workpieces are formed by stacking of layers by controlling layer-by-layer laser scanning. Its technological process is as follows: first, a three-dimensional model of a workpiece is sliced to obtain contour information of each layer of the workpiece; a powdered material is evenly spread on a surface of a working platform, and powder is selectively melted by laser according to system instructions; after a cross section is accomplished, a new layer of material is spread, and selective scanning is continued according to cross-section information corresponding to a three-dimensional object; and material spreading and scanning are performed for the next cross section by this method, and finally a three-dimensional workpiece is obtained. An advantage of this method is that it may be used to manufacture metal workpieces with high process flexibility, excellent workpiece mechanical properties and high dimensional accuracy.

However, in the selective laser melting process, heat distribution in laser scanned areas is concentrated, which is prone to cause problems of warping, deformation, cracking and the like due to a large temperature gradient with respect to surrounding powder that is not scanned by laser. Considering that during a construction process, changes in scanning path, scanning power, scanning speed and scanning spacing of laser in a scanning method will influence heat distribution and residual stress distribution, thereby influencing a final manufacturing effect, the design of a laser scanning method has been a research subject in the technology.

In the prior art, commonly used scanning modes may be mainly categorized into parallel line scanning, contour equidistant line scanning, and a mixture of parallel line scanning and contour equidistant line scanning, and common partitioning modes include stripe type and checkerboard type, etc., but most of them do not explicitly specify the order of scanning lines; however, the order of scanning lines will greatly influence local melt pool morphology, thereby influencing the surface quality and compactness of printed parts.

### SUMMARY OF THE INVENTION

Based on this, there is a need to provide, in view of the above technical problem, a laser scanning method and device for a powder bed fusion process, a computer device, and a storage medium. The method can effectively improve the surface quality and compactness of a formed part, and suppress local (especially at a contour) warping.

To achieve the above object, the present application provides a laser scanning method for a powder bed fusion process, the method including the following steps:
slicing a part to be printed to obtain a cross section to be scanned, wherein the cross section to be scanned is one or more closed polygons; and
selecting a portion or all of at least one polygon as an area to be processed, and scanning the area to be processed using the following policy:
   filling the interior of the area to be processed with fill lines, wherein all fill lines f(k) (k = 1, 2, ...m) close to or connected to a boundary of a contour of the polygon are parallel to each other; and
   scanning and sorting the parallel fill lines f(k), so that an end point of an end of a subsequently scanned fill line close to or connected to the contour does not exceed a previously scanned fill line adjacent to the subsequently scanned fill line.

As an optional solution of the present application, scanning and sorting the parallel fill lines f(k) specifically includes the following steps:
step 31: defining a pair of unit vectors M̅, -M̅, in opposite directions from the perpendicular direction of the parallel fill lines respectively;
step 32: taking a random point on each side of the area to be processed, making a unit vector F̅(i) passing through the point, in a direction parallel to f(k) and pointing to the interior of the part to be printed, and calculating C̅(i) according to the conditions that the direction of C̅(i) is parallel to the side and that C̅(i) · F̅(i) ≥ 0, wherein C̅(i) is a unit vector of the side;
step 33: if a full line of the fill lines f(k) is close to or connected to two sides of the area to be processed, calculating a product of a dot product of a unit vector *̅C̅*̅(*a*) of one of the two sides with M̅, and a dot product of a unit vector *̅C̅*̅(*b*) of the other of the two sides with M̅, and if (*̅C̅*̅(*a*) · *̅M̅*̅) × (*̅C̅*̅(*b*) · *̅M̅*̅) ≤ 0, then dividing the fill line into two or more fill lines to obtain new n fill lines that are close to or connected to the contour: *f'*(*k*) (k=1, 2,...n) (n≥m), wherein each fill line is close to or connected to only one side of the area to be processed;
step 34: for each fill line of the fill lines *f'*(*k*), calculating a dot product of a unit vector *̅C̅*̅(*k*) of the only side of the area to be processed close to or connected to the fill line and *̅M̅*̅, respectively, and if *̅C̅*̅(*k*) · *̅M̅*̅ ≥ 0, then determining a sorting vector of the fill line to be *̅M̅*̅; otherwise determining a sorting vector of the fill line to be -*̅M̅*̅; and
step 35: grouping fill lines with the same sorting vector and adjacent to each other into a scanning group, and scanning fill lines in the same scanning group sequentially in the direction of the sorting vector thereof.

As an optional solution of the present application, if the contour contains two or more scanning groups, scanning is performed sequentially between the two or more scanning groups in the direction of *̅M̅*̅ or -M̅.

As an optional solution of the present application, the fill line close to or connected to the boundary of the contour means that a distance between the end point of the fill line and the contour is within 0.5 mm.

As an optional solution of the present application, in step 33, the fill line is divided into two fill lines, and a dividing point is a midpoint of the fill line.

The present application also provides a laser scanning device for a powder bed fusion process, the device including:
a slicing module, configured to slice a part to be printed to obtain a cross section to be scanned, wherein the cross section to be scanned is one or more closed polygons; and
a scanning sequence control module, configured to select a portion or all of at least one polygon as an area to be processed, and scan the area to be processed using the following policy:
   filling the interior of the area to be processed with fill lines,
   wherein all fill lines f(k) (k = 1, 2, ...m) close to or connected to a boundary of a contour of the polygon are parallel to each other; and
   scanning and sorting the parallel fill lines f(k), so that an end point of an end of a subsequently scanned fill line close to or connected to the contour does not exceed a previously scanned fill line adjacent to the subsequently scanned fill line.

The present application further provides a laser scanning apparatus including a memory, a processor, and a computer program stored in the memory and executable on the processor, wherein when executing the computer program, the processor implements the steps of the method in any of the above paragraphs.

The present application further provides a computer device including a memory with a computer program stored therein and a processor, wherein when executing the computer program, the processor implements the steps of the method in any of the above paragraphs.

The present application further provides a computer-readable storage medium, configured to store a computer program therein, wherein the computer program, when executed by a processor, performs the steps of the method in any of the above paragraphs.

According to the laser scanning method for a powder bed fusion process of the present application, including: slicing a part to be printed to obtain a cross section to be scanned having one or more closed polygons, wherein the cross section to be scanned is one or more closed polygons; selecting part or all of at least one polygon as an area to be processed, and scanning the area to be processed using the following policy: filling the interior of the area to be processed with fill lines, wherein all fill lines f(k) (k = 1, 2, ...m) close to or connected to a boundary of a contour of the polygon are parallel to each other; and scanning and sorting the parallel fill lines f(k), so that an end point of an end of a subsequently scanned fill line close to or connected to the contour does not exceed a previously scanned fill line adjacent to the subsequently scanned fill line, the present application achieves, by controlling the scanning sequence of fill lines close to or connected to the contour, that the shapes of melt pools formed by the fill lines can be controlled precisely, especially the shapes of melt pools at heads and tails of the scanned lines, and the melt pool formed by the subsequently scanned fill line relies, to the maximum extent, on one side of the melt pool formed by the previously scanned line, which facilitates the gradient control of local temperature of the melt pools, thereby forming a perfect melt pool shape, thus effectively improving the surface quality and compactness of a formed part and suppressing local (especially at the contour) warping.

### BRIEF DESCRIPTION OF THE DRAWINGS

Fig. 1 is a method flow diagram provided for a laser scanning method for a powder bed fusion process in the present application;
Fig. 2 is a working diagram I of embodiment I provided for a laser scanning method for a powder bed fusion process in the present application;
Fig. 3 is a working diagram II of embodiment I provided for a laser scanning method for a powder bed fusion process in the present application;
Fig. 4 is a working diagram III of embodiment I provided for a laser scanning method for a powder bed fusion process in the present application;
Fig. 5 is a working diagram IV of embodiment I provided for a laser scanning method for a powder bed fusion process in the present application;
Fig. 6 is a working diagram V of embodiment I provided for a laser scanning method for a powder bed fusion process in the present application;
Fig. 7 is a working diagram VI of embodiment I provided for a laser scanning method for a powder bed fusion process in the present application;
Fig. 8 shows another working state diagram of embodiment I provided for a laser scanning method for a powder bed fusion process in the present application;
Fig. 9 is a working diagram I of embodiment II provided for a laser scanning method for a powder bed fusion process in the present application;
Fig. 10 is a working diagram II of embodiment II provided for a laser scanning method for a powder bed fusion process in the present application;
Fig. 11 is a working diagram III of embodiment II provided for a laser scanning method for a powder bed fusion process in the present application;
Fig. 12 is a working diagram IV of embodiment II provided for a laser scanning method for a powder bed fusion process in the present application;
Fig. 13 is a working diagram V of full embodiment II provided for a laser scanning method for a powder bed fusion process in the present application;
Fig. 14 is another working state diagram of embodiment II provided for a laser scanning method for a powder bed fusion process in the present application;
Fig. 15 is a schematic structural diagram of a laser scanning device for a powder bed fusion process in embodiments of the present application; and
Fig. 16 is a schematic structural diagram of a computer device in embodiments of the present application.

### DETAILED DESCRIPTION

To make the objectives, technical solutions and advantages of the present application clearer and more apparent, the present application will be further described in detail below in conjunction with the accompanying drawings and embodiments. It should be appreciated that the specific embodiments described herein are only intended to explain the present application, and are not used for limiting the present application.

Scanning modes in the prior art do not define the order of scanning lines, and therefore often result in local melt pool morphology, thereby influencing the surface quality and compactness of printed parts. The inventors of the present application have discovered through creative work that: if fill lines within each slice of a part to be printed can be sorted, i.e. if fill lines whose ends (including heads and tails) are close to or connected to a contour are controlled such that a scanned line end of a subsequently scanned line does not exceed a previously scanned line adjacent to the subsequently scanned line, then the shapes of melt pools formed by the fill lines can be controlled precisely, especially the shapes of melt pools at the full heads and tails of the scanned lines, and the melt pool formed by the subsequently scanned fill line relies, to the maximum extent, on one side of the melt pool formed by the previously scanned line, which facilitates the gradient control of local temperature of the melt pools, thereby forming a perfect melt pool shape, thus effectively improving the surface quality and compactness of a formed part and suppressing local (especially at the contour) warping.

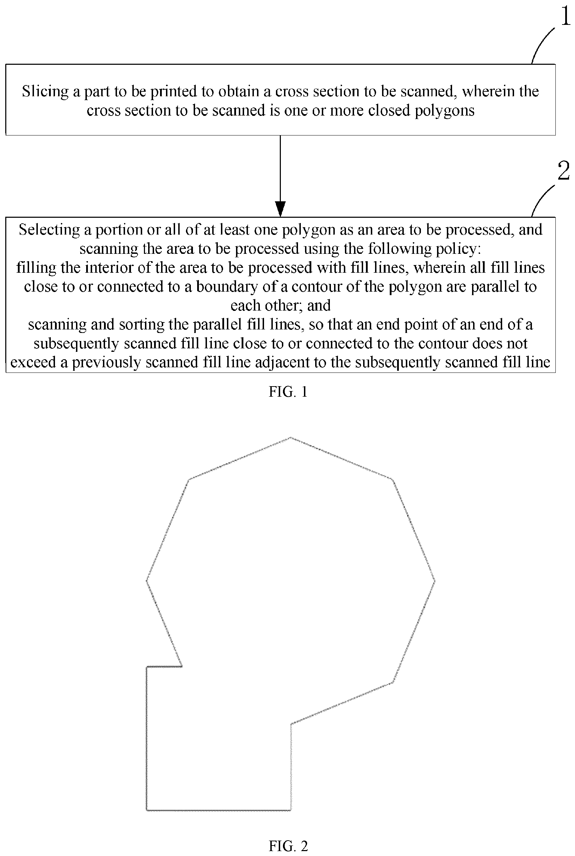

As shown in Fig. 1, the present application provides a laser scanning method for a powder bed fusion process. The method includes the following steps:
step 1: slicing a part to be printed to obtain a cross section to be scanned, wherein the cross section to be scanned is one or more closed polygons; and
step 2: selecting a portion or all of at least one polygon as an area to be processed, and scanning the area to be processed using the following policy:
   filling the interior of the area to be processed with fill lines, wherein all fill lines f(k) (k = 1, 2, ...m) close to or connected to a boundary of a contour of the polygon are parallel to each other; and
   scanning and sorting the parallel fill lines f(k), so that an end point of an end of a subsequently scanned fill line close to or connected to the contour does not exceed a previously scanned fill line adjacent to the subsequently scanned fill line.

The area to be processed here may be all or some polygon(s) of the cross-section to be scanned, and may also be some or all area(s) of all polygon(s) selected, or some or all area(s) of some polygon(s) selected, which may be specifically determined according to actual needs. Of course, optionally, the area to be processed here may be all area(s) of all polygon(s) of the cross-section to be scanned.

In order to enable those skilled in the art to better understand and implement the technical solution of the present application, the technical solution of the present application is described in detail below in the form of embodiments.

### Embodiment 1

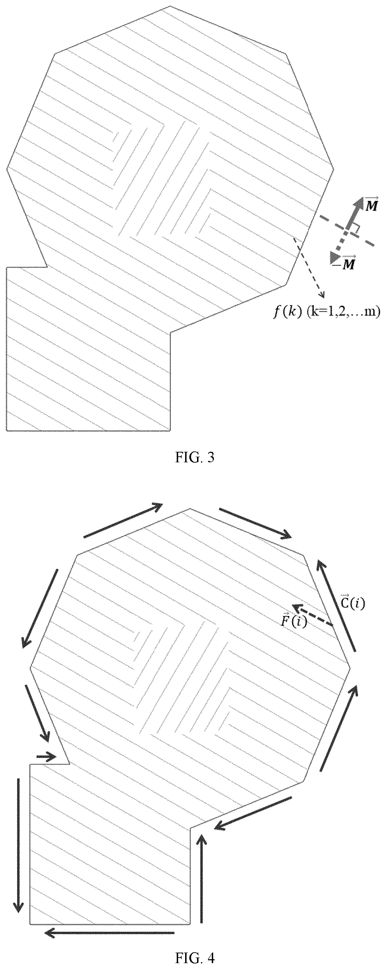

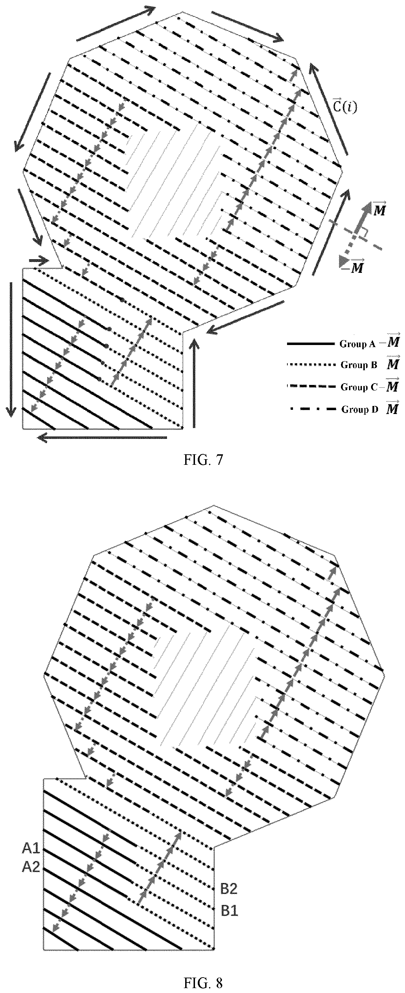

A laser scanning method for a powder bed fusion process in this embodiment includes the following steps:
step 11: slicing a part to be printed to obtain a cross section to be scanned, wherein the cross section to be scanned is one or more closed polygons, as shown in Fig. 2;
step 12: filling the interior of the area to be processed with fill lines and scanning vectors, and selecting all full area(s) of at least one polygon as an area to be processed, wherein at least all fill lines f(k) (k = 1, 2, ... m) close to or connected to a boundary of a contour of the polygon are parallel to each other, as shown in Fig. 3 (it is to be noted here that the figure only illustrates a scanning policy for one polygon, and scanning policies for other polygon(s) are executed with reference thereto), wherein the fill lines close to or connected to the boundary of the contour means that a distance between the end point of the fill line and the contour is within 0.5 mm. It is to be noted here that specific meanings of all fill lines f(k) (k = 1, 2, ...m) close to or connected to a boundary of a contour of the polygon being parallel to each other in this step are as follows: firstly, end points of all fill lines near the contour are either connected directly to the contour or at a distance of less than or equal to 0.5 mm from the contour; secondly, fill lines at the inner center of each polygon (that is, a center area far away from the contour) may be not parallel to the fill lines near the contour, as shown in Fig. 3, and of course, it is also possible to set all fill lines in the polygon to be parallel to each other; and thirdly, the lengths of the fill lines near the contour that are parallel to each other are not specifically limited in the present application, but may be set according to the area of the polygon and other parameter requirements.
step 13: scanning and sorting the parallel fill lines f(k), so that an end point of an end of a subsequently scanned fill line close to or connected to the contour does not exceed a previously scanned fill line adjacent to the subsequently scanned fill line. As shown in Fig. 8, wherein A1 and A2 in Fig. 8 are a group of fill lines adjacent to each other, and B1 and B2 are another group of fill lines adjacent to each other, by implementing the solution of the present application, scanning and sorting of the parallel fill lines f(k) are reasonably controlled, so that an end point of an end of the subsequently scanned fill line A2 close to or connected to the contour does not exceed the previously scanned fill line A1, that is, if a perpendicular line is drawn from the end point of the fill line A2 connected to the contour to the fill line A1, a foot thereof lies within the fill line A1; similarly, an end point of the subsequently scanned fill line B2 close to or connected to the contour does not exceed the previously scanned fill line B1, that is, if a perpendicular line is drawn from the end point of the fill line B2 connected to the contour to the fill line B1, a foot thereof lies within the fill line B1.

It is to be noted here that the innovation of the present application is to set the scanning sequence of the fill lines within the contour, without limiting the scanning sequence of the contour, so the contour may be scanned in any mode of the prior art, which is not specifically described here.

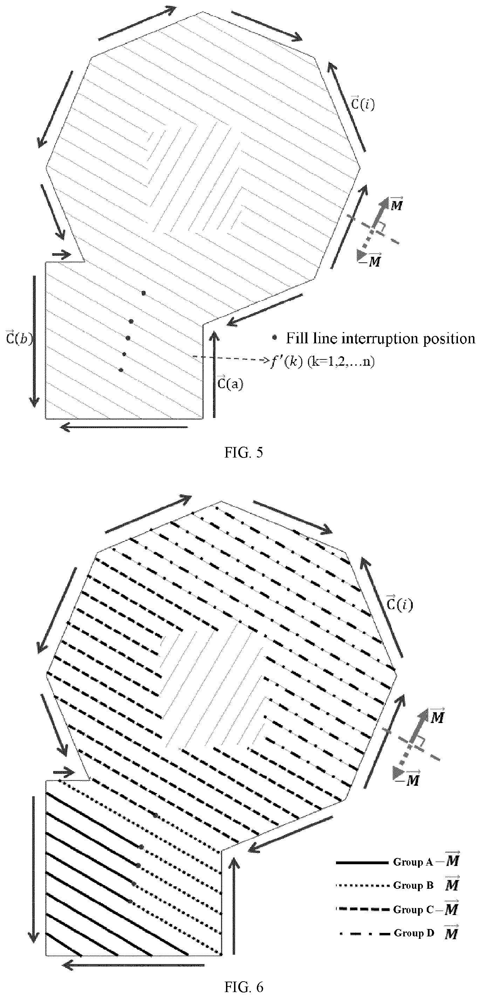

As an optional embodiment of the present application, scanning and sorting the parallel fill lines f(k) in Fig. 3 described above specifically includes the following steps:
step 31: defining a pair of unit vectors M̅, -M̅ in opposite directions from the perpendicular direction of the parallel fill lines respectively, as shown in Fig. 3; it is to be noted here that although Fig. 3 only illustrates the layout of fill lines of one polygon, it needs to be noted that fill lines of other polygons may be set respectively with reference to the solution, and of course, the directions of fill lines of different polygons may be the same or different;
step 32: taking a random point on each side of the area to be processed, making a unit vector F̅(i) passing through the point, in a direction parallel to f(k) and pointing to the interior of the part to be printed, and calculating C̅(i) according to the conditions that the direction of C̅(i) is parallel to the side and that C̅(i) · F̅(i) ≥ 0, wherein C̅(i) is a unit vector of the side; that is to say, C̅(i) is obtained by ensuring that C̅(i) satisfies the conditions that its direction is parallel to a contour segment i, and C̅(i) · F̅(i) ≥ 0, i.e., an included angle between C̅(i) and F̅(i) is not more than 90 degrees, as shown in Fig. 4;
step 33: if a fill line of the fill lines f(k) is close to or connected to two sides of the area to be processed, calculating a product of a dot product of a unit vector *̅C̅*̅(*a*) of one of the two sides with M̅, and a dot product of a unit vector *̅C̅*̅(*b*) of the other of the two sides with M̅, and if (*̅C̅*̅(*a*) · *̅M̅*̅) × (*̅C̅*̅(*b*) · *̅M̅*̅) ≤ 0, then dividing the fill line into two or more fill lines to obtain new n fill lines that are close to or connected to the contour: *f'*(*k*) (k=1, 2,...n) (n≥m), wherein each fill line is close to or connected to only one side of the area to be processed, as shown in Fig. 5; optionally, the fill line may be divided into two fill lines, and a dividing point is a midpoint of the fill line, which may facilitate processing, and of course, in specific implementation, some of the fill lines may be each divided into two fill lines, and some of the fill lines may also be each divided into a plurality of fill lines, e.g., three fill lines, which is not be limited here;
step 34: for each fill line of the fill lines *f'*(*k*), calculating a dot product of a unit vector *̅C̅*̅(*k*) of the only side of the area to be processed close to or connected to the fill line and M̅, respectively, and if *̅C̅*̅(*k*) · M̅ ≥ 0, then determining a sorting vector of the fill line to be M̅; otherwise determining a sorting vector of the fill line to be -M̅, as shown in Fig. 6; and
step 35: grouping fill lines with the same sorting vector and adjacent to each other into a scanning group, and scanning fill lines in the same scanning group sequentially in the direction of the sorting vector thereof. As shown in Fig. 7, the fill lines within the polygon may be grouped into four scanning groups, and a scanning sequence of fill lines of each scanning group is shown in Fig. 7.

As an optional solution I of the present application, if the contour contains two or more scanning groups, scanning is performed sequentially between the two or more scanning groups in the direction of M̅ or -M̅. For example, scanning may be performed in the sequence of B, D, C, and A in this embodiment.

As an optional solution II of the present application, if the contour contains two or more scanning groups, scanning may be performed sequentially between the two or more scanning groups in the sequence of contour lines to which they belong. For example, scanning may be performed in the sequence of A, B, C, and D in this embodiment.

Of course, in specific implementation, other scanning sequences may be used between the scanning groups, which is not limited in the present application.

### Embodiment 2

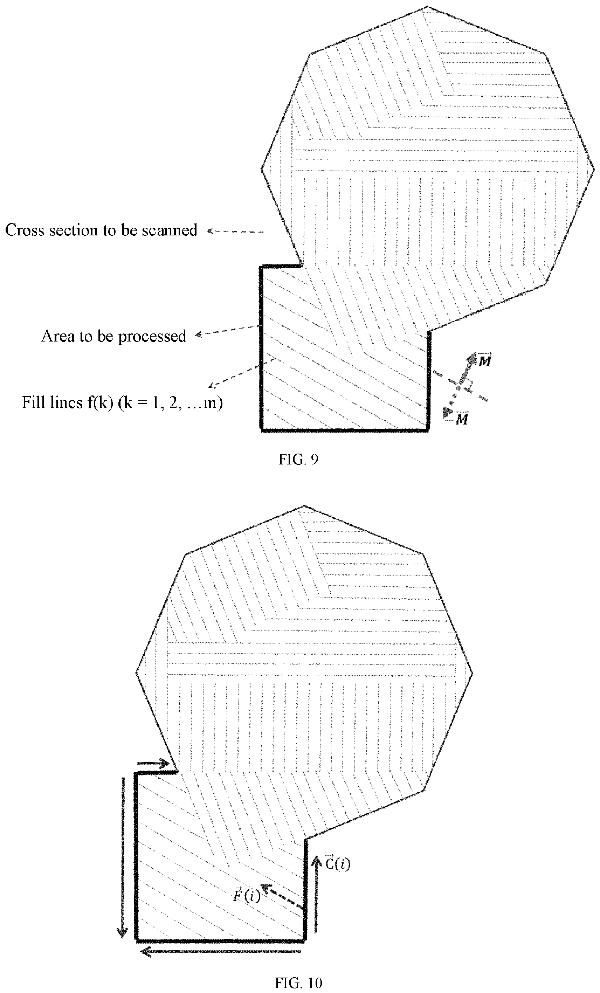

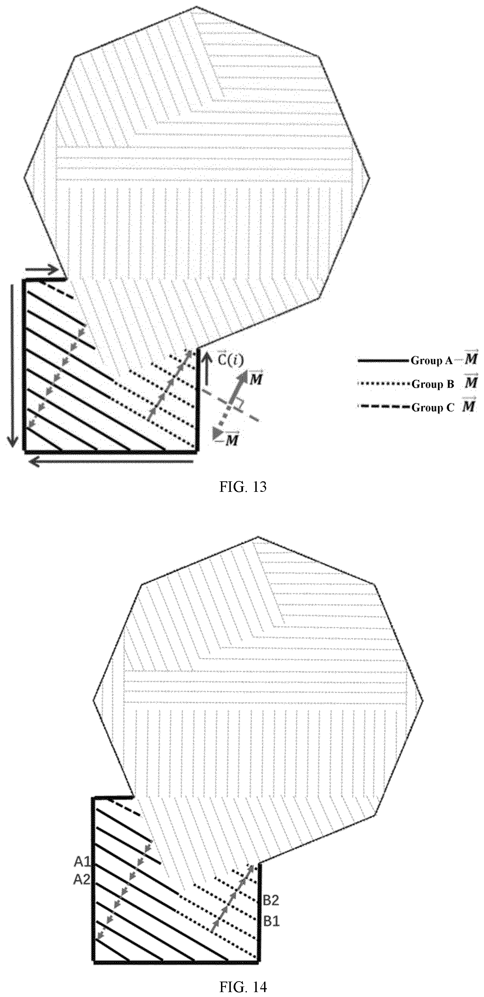

A laser scanning method for a powder bed fusion process in this embodiment includes the following steps:
step 21: slicing a part to be printed to obtain a cross section to be scanned, wherein the cross section to be scanned is one or more closed polygons;
step 22: filling the interior of the area to be processed with fill lines and scanning vectors, and selecting a portion of at least one polygon as an area to be processed (for the area to be processed, see an area surrounded by a bottom thickened contour line of a polygon in Fig. 9), wherein at least all fill lines f(k) (k = 1, 2, ...m) close to or connected to a boundary of a contour of the polygon are parallel to each other; and
step 23: scanning and sorting the parallel fill lines f(k), so that an end point of an end of a subsequently scanned fill line close to or connected to the contour does not exceed a previously scanned fill line adjacent to the subsequently scanned fill line. As shown in Fig. 14, wherein A1 and A2 in Fig. 14 are a group of fill lines adjacent to each other, and B1 and B2 are another group of fill lines adjacent to each other, by implementing the solution of the present application, scanning and sorting of the parallel fill lines f(k) are reasonably controlled, so that an end point of an end of the subsequently scanned fill line A2 close to or connected to the contour does not exceed the previously scanned fill line A1, that is, if a perpendicular line is drawn from the end point of the fill line A2 connected to the contour to the fill line A1, a foot thereof lies within the fill line A1; similarly, an end point of the subsequently scanned fill line B2 close to or connected to the contour does not exceed the previously scanned fill line B1, that is, if a perpendicular line is drawn from the end point of the fill line B2 connected to the contour to the fill line B1, a foot thereof lies within the fill line B1.

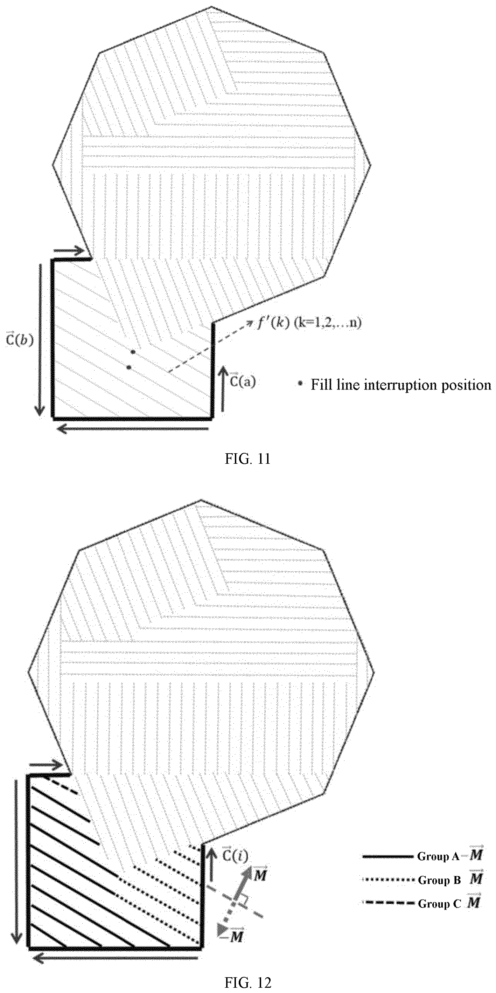

Scanning and sorting the parallel fill lines f(k) illustrated in Fig. 9 specifically includes the following steps:
step 41: defining a pair of unit vectors M̅, -M̅, in opposite directions from the perpendicular direction of the parallel fill lines respectively, as shown in Fig. 9;
step 42: taking a random point on each side of the area to be processed, making a unit vector F̅(i) passing through the point, in a direction parallel to f(k) and pointing to the interior of the part to be printed, and calculating C̅(i) according to the conditions that the direction of C̅(i) is parallel to the side and that C̅(i) · F̅(i) ≥ 0, wherein C̅(i) is a unit vector of the side; that is to say, C̅(i) is obtained by ensuring that C̅(i) satisfies the conditions that its direction is parallel to a contour segment i, and C̅(i) · F̅(i) ≥ 0, i.e., an included angle between C̅(i) and F̅(i) is not more than 90 degrees, as shown in Fig. 10;
step 43: if a fill line of the fill lines f(k) is close to or connected to two sides of the area to be processed, calculating a product of a dot product of a unit vector *̅C̅*̅(*a*) of one of the two sides with M̅, and a dot product of a unit vector *̅C̅*̅(*b*) of the other of the two sides with M̅, and if (*̅C̅*̅(*a*) · *̅M̅*̅) × (*̅C̅*̅(*b*) · *̅M̅*̅)≤0, then dividing the fill line into two or more fill lines to obtain new n fill lines that are close to or connected to the contour: *f*'(*k*) (k=1, 2,...n) (n≥m), wherein each fill line is close to or connected to only one side of the area to be processed, as shown in Fig. 11;
step 44: for each fill line of the fill lines *f'*(*k*), calculating a dot product of a unit vector *̅C̅*̅(*k*) of the only side of the polygon close to or connected to the fill line and M̅, respectively, and if *̅C̅*̅(*k*) · *̅M̅*̅≥0, then determining a sorting vector of the fill line to be M̅; otherwise determining a sorting vector of the fill line to be -M̅, as shown in Fig. 12; and
step 45: grouping fill lines with the same sorting vector and adjacent to each other into a scanning group, and scanning fill lines in the same scanning group sequentially in the direction of the sorting vector thereof. As shown in Fig. 13, the fill lines in the area to be processed within the polygon may be grouped into three scanning groups, and a scanning sequence of fill lines of each scanning group is shown in Fig. 13, wherein group C has only one scanning vector, which is not limited.

As an optional solution I of the present application, if the contour contains two or more scanning groups, scanning is performed sequentially between the two or more scanning groups in the direction of M̅ or -M̅. For example, scanning may be performed in the sequence of A, B, and C in this embodiment.

As an optional solution II of the present application, if the contour contains two or more scanning groups, scanning may be performed sequentially between the two or more scanning groups in the sequence of contour lines to which they belong. For example, scanning may be performed in the sequence of B, A, and C in this embodiment.

Of course, in specific implementation, other scanning sequences may be used between the scanning groups, which is not limited in the present application.

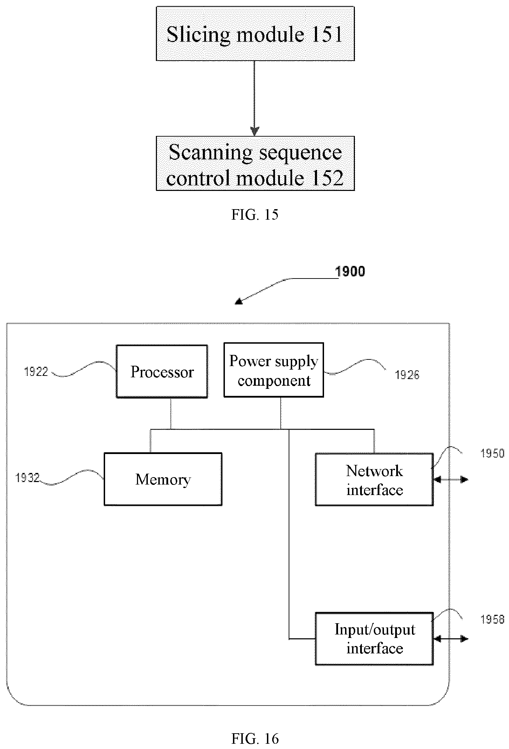

The present application also provides a laser scanning device for a powder bed fusion process, as shown in Fig. 15. The device includes the following modules:
A slicing module 151 is configured to slice a part to be printed to obtain a cross section to be scanned, wherein the cross section to be scanned is one or more closed polygons. For details, see description related to step 1 in the above method embodiment, and it will not be repeated here.

A scanning sequence control module 152 is configured to select a portion or all of at least one polygon as an area to be processed, and scan the area to be processed using the following policy:
filling the interior of the area to be processed with fill lines, wherein all fill lines f(k) (k = 1, 2, ...m) close to or connected to a boundary of a contour of the polygon are parallel to each other; and
scanning and sorting the parallel fill lines f(k), so that an end point of an end of a subsequently scanned fill line close to or connected to the contour does not exceed a previously scanned fill line adjacent to the subsequently scanned fill line.

For details of the scanning sequence control module 152, see description related to step 2 in the above method embodiment, and it will not be repeated here.

The laser scanning device for a powder bed fusion process in this embodiment is presented in the form of functional units. The units here refer to ASIC circuitry, a processor executing one or more software or fixed programs, and a memory, and/or other devices that can provide the above functions.

Further functional description of the above modules is the same as in the corresponding embodiment described above, and it will not be repeated here.

The present application further provides a powder bed fusion apparatus, including a memory, a processor, and a computer program stored in the memory and executable on the processor, wherein when executing the computer program, the processor implements the steps of the laser scanning method for a powder bed fusion process in any embodiment described above.

Fig. 16 is a schematic structural diagram of a computer device 1900 for implementing a laser scanning method for a powder bed fusion process in embodiments of the present application. For example, the computer device 1900 may be a server or a terminal device. As shown in Fig. 16, the computer device 1900 includes a memory 1932 and a processor 1922, wherein executable instructions, such as an application program, that are executable by the processor 1922 are stored in the memory 1932. The application program stored in the memory 1932 may include one or more modules corresponding to a set of executable instructions. Additionally, the processor 1922 is configured to execute executable instructions to perform the steps of the laser scanning method for a powder bed fusion process in the embodiment described above.

A power supply component 1926 may be configured to perform power management of the computer device 1900; a wired or wireless network interface 1950 may be configured to connect the computer device 1900 to a network; and the computer device 1900 may also include an input/output (I/O) interface 1958. The computer device 1900 may run an operating system stored in the memory 1932, such as Windows ServerTM, Mac OS XTM, UnixTM, LinuxTM, FreeBSDTM, or the like. Embodiments of the present application may be computer devices, systems, methods, and/or computer program products. A computer program product may include a computer-readable storage medium with executable instructions therein that cause a processor to implement the laser scanning method for a powder bed fusion process in embodiments of the present application.

It is to be noted that Fig. 16 only illustrates hardware architecture of a computer device, but it should be understood that it is not required that all of the illustrated components be implemented, and instead, more or fewer components may be implemented.

The present application further provides a computer-readable storage medium, which stores a computer program therein, wherein the computer program, when executed by a processor, implements the steps of the laser scanning method for powder bed fusion process in any embodiment described above.

The computer-readable storage medium may be a tangible device containing processor-executable instructions. For example, the computer-readable storage medium may be, but not limited to, an electrical storage device, a magnetic storage device, an optical storage device, an electromagnetic storage device, a semiconductor storage device, or any suitable combination thereof. More specifically, the computer-readable storage medium may include: a portable computer disk, a hard disk, a random access memory (RAM), a read only memory (ROM), an erasable programmable read only memory (EPROM or flash memory), a static random access memory (SRAM), a portable compact disk read-only memory (CD-ROM), a digital versatile disk (DVD), a memory stick, a floppy disk, a mechanical encoding device, such as a punched card or a grooved structure with raised elements, with instructions stored therein, and any suitable combinations thereof. The computer-readable storage medium used here is not interpreted as a transient signal itself, such as a radio wave or other freely propagating electromagnetic wave, an electromagnetic wave propagating through a waveguide or other transmission medium (such as a light pulse through a fiber optic cable), or an electrical signal transmitted through an electric wire.

The instructions described here may be downloaded from the computer-readable storage medium to various computing/processing devices, or downloaded to an external computer or external storage device via a network, such as the Internet, a local area network, a wide area network, and/or a wireless network. The network may include a copper transmission cable, optical fiber transmission, wireless transmission, router, firewall, switch, gateway computer, and/or edge server. A network adapter card or network interface in each computing/processing device receives computer-readable program instructions from the network, and forwards the computer-readable program instructions for storage in the computer-readable storage medium in each computing/processing device.

The instructions for performing the operations of the present application may be assembly instructions, instruction set architecture (ISA) instructions, machine instructions, machine-related instructions, microcode, firmware instructions, state setting data, or source code or object code written in any combination of one or more programming languages, the programming languages including object-oriented programming languages such as Smalltalk and C++, and conventional procedural programming languages such as "C" or similar programming languages. The instructions may be executed entirely on a user's computer, partly on a user's computer, as an independent software package, partly on a user's computer and partly on a remote computer, or entirely on a remote computer or server. In the case where a remote computer is involved, the remote computer may be connected to a user's computer through any type of network, including a local area network (LAN) or wide area network (WAN), or may be connected to an external computer (such as connected through the Internet using an Internet service provider). In some embodiments, an electronic circuit, such as a programmable logic circuit, a field programmable gate array (FPGA), or a programmable logic array (PLA), may be customized by using status information of the instructions, and the electronic circuit may execute the instructions to implement various aspects of the present application.

Obviously, it should be appreciated by those skilled in the art that the modules or steps in embodiments of the present application described above may be implemented with a general-purpose computing device, and they may be centralized on a single computing device or distributed on a network composed of a plurality of computing devices; optionally, they may be implemented with program code executable by a computing device, so they may be stored in a storage device and executed by a computing device, and in some cases, the steps shown or described may be performed in a different sequence from that illustrated here, and implemented either by making them into individual integrated circuit modules respectively, or by making multiple modules or steps thereof into a single integrated circuit module. Thus, embodiments of the present application are not limited to any particular combination of hardware and software. The technical features of the above embodiments can be combined in any way. For the sake of brevity, not all possible combinations of the technical features of the above-described embodiments are described. However, as long as there are no contradictions in the combinations of the technical features, they should be considered to be within the scope of this specification. The above-described embodiments express only several embodiments of the present application, and description thereof is relatively specific and detailed, but they should not be construed as limiting the patent scope of the present application. It should be noted that for those of ordinary skill in the art, various modifications and improvements may also be made without departing from the conception of the present application, and all these modifications and improvements should be encompassed within the protection scope of the present application. Therefore, the patent protection scope of the present application should be defined by the appended claims.

## Claims

1. A laser scanning method for a powder bed fusion process, comprising:
slicing a part to be printed to obtain a cross section to be scanned, wherein the cross section to be scanned is one or more closed polygons; and
selecting a portion or all of at least one polygon as an area to be processed, and scanning the area to be processed using the following policy:
filling the interior of the area to be processed with fill lines,
wherein all fill lines f(k) (k = 1, 2, ... m) close to or connected to a boundary of a contour of the polygon are parallel to each other; and
scanning and sorting the parallel fill lines f(k), so that an end point of an end of a subsequently scanned fill line close to or connected to the contour does not exceed a previously scanned fill line adjacent to the subsequently scanned fill line.

2. The laser scanning method for a powder bed fusion process according to claim 1, wherein scanning and sorting the parallel fill lines f(k) specifically comprises the following steps:
step 31: defining a pair of unit vectors M̅, -M̅ in opposite directions from the perpendicular direction of the parallel fill lines respectively;
step 32: taking a random point on each side of the area to be processed, making a unit vector F̅(i) passing through the point, in a direction parallel to f(k) and pointing to the interior of the part to be printed, and calculating C̅(i) according to the conditions that the direction of C̅(i) is parallel to the side and that C̅(i) · F̅(i) ≥ 0, wherein C̅(i) is a unit vector of the side;
step 33: if a fill line of the fill lines f(k) is close to or connected to two sides of the area to be processed, calculating a product of a dot product of a unit vector *̅C̅*̅(*a*) of one of the two sides with M̅, and a dot product of a unit vector *̅C̅*̅(*b*) of the other of the two sides with M̅, and if (*̅C̅*̅(*a*) · *̅M̅*̅) × (*̅C̅*̅(*b*) · *̅M̅*̅) ≤ 0, then dividing the fill line into two or more fill lines to obtain new n fill lines that are close to or connected to the contour: *f'*(*k*) (k=1, 2,...n) (n≥m), wherein each fill line is close to or connected to only one side of the area to be processed;
step 34: for each fill line of the fill lines *f'*(*k*), calculating a dot product of a unit vector *̅C̅*̅(*k*) of the only side of the area to be processed close to or connected to the fill line and M̅, respectively, and if *̅C̅*̅(*k*) · *̅M̅*̅ ≥ 0, then determining a sorting vector of the fill line to be *̅M̅*̅; otherwise determining a sorting vector of the fill line to be -M̅; and
step 35: grouping fill lines with the same sorting vector and adjacent to each other into a scanning group, and scanning fill lines in the same scanning group sequentially in the direction of the sorting vector thereof.

3. The laser scanning method for a powder bed fusion process according to claim 1 or 2, wherein if the contour contains two or more scanning groups, scanning is performed sequentially between the two or more scanning groups in the direction of *̅M̅*̅ or -M̅.

4. The laser scanning method for a powder bed fusion process according to claim 1 or 2, wherein the fill line close to or connected to the boundary of the contour means that a distance between the end point of the fill line and the contour is within 0.5 mm.

5. The laser scanning method for a powder bed fusion process according to claim 1 or 2, wherein in step 33, the fill line is divided into two fill lines, and a dividing point is a midpoint of the fill line.

6. A laser scanning device for a powder bed fusion process, comprising:
a slicing module, configured to slice a part to be printed to obtain a cross section to be scanned, wherein the cross section to be scanned is one or more closed polygons; and
a scanning sequence control module, configured to select part or all of at least one polygon as an area to be processed, and scan the area to be processed using the following policy:
filling the interior of the area to be processed with fill lines,
wherein all fill lines f(k) (k = 1, 2, ... m) close to or connected to a boundary of a contour of the polygon are parallel to each other; and
scanning and sorting the parallel fill lines f(k), so that an end point of an end of a subsequently scanned fill line close to or connected to the contour does not exceed a previously scanned fill line adjacent to the subsequently scanned fill line.

7. A powder bed fusion apparatus, comprising a memory, a processor, and a computer program stored in the memory and executable on the processor, wherein when executing the computer program, the processor implements the steps of the method of any one of claims 1 to 5.

8. A computer device, comprising a memory with a computer program stored therein and a processor, wherein when executing the computer program, the processor implements the steps of the method of any one of claims 1 to 5.

9. A computer readable storage medium, configured to store a computer program therein, wherein the computer program, when executed by a processor, implements the steps of the method of any one of claims 1 to 5.
